# EUROPEAN PATENT SPECIFICATION

(11) **EP 1 855 446 B1**
(45) Date of publication and mention of the grant of the patent: **22.10.2008**
(21) Application number: 06290755.5
(22) Date of filing: 11.05.2006
(51) Int. Cl.: H04L 29/12

(54) **Processing of a DNS service request**
Bearbeitung einer DNS-Dienstnachfrage
Traitement d'une demande de service DNS

(43) Date of publication of application: 14.11.2007
(73) Proprietor: Alcatel Lucent, 75008 Paris (FR)
(72) Inventor: Laible, Volker, Dipl.-Ing., 70469 Stuttgart (DE)
(74) Representative: Schmidt, Werner Karl

(56) References cited:
- US-B1- 6 425 003

## Description

The present invention relates to a method of processing a service request, and a specific DNS server and a computer program product to execute said method (DNS = Domain Name Service/Server).

When SIP was developed as a peer-to-peer protocol, the theoretical background was a completely open IP network where every calling client could reach any other called client (SIP = Session Initiation Protocol; IP = Internet Protocol). Today, SIP has to prove its worth in a reality where the IP network consists of a multitude of sealed-off sub-networks comprising hurdles like firewalls, NAT boxes, billing and similar network elements (NAT = Network Address Translation).

IMS architecture does not (yet) consider Session Border Controllers (IMS = IP Multimedia Subsystem). However, Session Border Controllers are already playing an important part in NGN infrastructures (NGN = Next Generation Networks). SIP entities located in a sub-network behind a Session Border Controller (= SBC) need to contact an outgoing SIP proxy, also known as outbound SIP proxy, when trying to communicate with other SIP entities outside of their sub-network. The outgoing SIP proxy will route the messages originating from the SIP entities to a packet-to-packet gateway of the SBC.

However, today not every SIP UA (= User Agent) or SIP server offers to set such an outgoing SIP proxy. Instead, some SIP UAs or SIP servers try to resolve the SIP URI themselves (URI = Uniform Resource Identifier). One solution would be to modify these SIP entities, so that they do not resolve the SIP URI themselves but contact the outgoing SIP proxy instead. But modifying a SIP entity is not always possible or practical. For example, the SIP UA or server may have been written by someone else and one does not have the source code. Also, modifying the source code can be rather complex. Or one might not even have access to the SIP entity at all.

US 6 425 003 B1 describes a method and an apparatus for resolving where to forward DNS requests for a user simultaneously logged into more than one service existing on a data communications network. Said method utilizes an active service list (ASL) to keep track of the services that the user is currently logged into. The active service list includes a list of services sorted in a particular order based on information about the service and sometimes the order in which the user logged into the services. Each service has a profile that defines, among other things, the IP Address space for the service and a Domain attribute. To determine the appropriate service and, therefore, the appropriate DNS server for a DNS request, the QName from the DNS request is compared to the configured Domain attribute(s) for each service in the order of the ASL. If a match is found, then the DNS request packet is modified to re-direct the DNS request to the DNS server configured for the matched service. If no domain match is found and the user is logged into an Internet Service, then the DNS request packet is modified to re-direct the DNS request to the DNS server configured for the first Internet Service found in the user's ASL. If no domain match is found and the user is not logged into an active Internet Service, then the DNS request is not re-directed, but rather forwarded unmodified.

It is the object of the present invention to provide an improved processing of a service request.

The object of the present invention is achieved by a method of processing a service request originating in a sub-network of an IP network and targeted outside of the sub-network, whereby the sub-network is connected to an adjacent sub-network of the IP network by means of a Session Border Controller, wherein the method comprises the steps of receiving a DNS request associated with the service request at a specific DNS server receiving DNS requests in place of a regular DNS server, analysing the received DNS request, if the received DNS request is related to one of a set of pre-defined services, resolving the received service-related DNS request with an address involving the routing of said service request to the Session Border Controller, and otherwise, if the received DNS request is not related to one of the set of pre-defined services, forwarding the DNS request to the regular DNS server. The object of the present invention is further achieved by a specific DNS server for processing a DNS request associated with a service request, wherein the specific DNS server comprises an interface receiving the DNS request associated with the service request, and a control unit adapted to analyse the received DNS request, if the received DNS request is related to one of a set of pre-defined services, resolving the received service-related DNS request with an address involving the routing of said service request to a Session Border Controller, and otherwise, if the received DNS request is not related to one of the set of pre-defined services, forward the DNS request to a regular DNS server. And the object of the present invention is further achieved by a computer program product for processing a service request, whereby the computer program product, when executed by a specific DNS server, performs the steps of receiving a DNS request associated with the service request at the specific DNS server in place of a regular DNS server, analysing the received DNS request, if the received DNS request is related to one of a set of pre-defined services, resolving the received service-related DNS request with an address involving the routing of said service request to a Session Border Controller, otherwise, if the received DNS request is not related to one of the set of pre-defined services, forwarding the DNS request to the regular DNS server.

An address involving the routing of said service request to the Session Border Controller may be an address, preferably IP address, of a network element such as a proxy server, which routes incoming service requests to a Session Border Controller. It is also possible that an address involving the routing of said service request to the Session Border Controller may be an address, preferably IP address, of the Session Border Controller. In any case, if the received DNS request is related to one of a set of pre-defined services, the received service-related DNS request is resolved - without referring to the regular DNS server - by the specific DNS server with an address such that the service request is routed directly or indirectly to the Session Border Controller.

The above mentioned Session Border Controller in the sense of the invention may be any network element which processes a service request in a service specific manner and is committed to direct the service request to a destination, inside or outside the sub-network. Thus, a Session Border Controller in the sense of the invention may be a "classical" Session Border Controller controlling the border of a domain/(sub-)network as well as a gateway, a router, a proxy or any other network element capable to fulfill the tasks required according to the present invention.

A "classical" SBC as meant in the present description is a piece of network equipment or a collection of functions that control real-time session traffic at the signalling, call-control, and packet layers as the traffic packets cross a notional packet-to-packet network border between networks or between network segments. SBCs are critical to the deployment of VoIP networks, because they address the inability of real-time session traffic to cross a NAT device or firewall boundaries (VoIP = Voice over IP).

SBCs are put into the signalling and media path between calling and called party. The SBC acts as if it was the called VoIP phone, terminates the arriving first call and places/sets up a second call to the called party. The effect of this termination/set-up behaviour is that not only the signalling traffic, but also the media traffic (voice, video etc) crosses the SBC. Without an SBC, the media traffic travels directly between the VoIP phones. Private SBCs are used along with firewalls to enable VoIP calls to and from a protected enterprise network. Public VoIP service providers use SBCs to allow the use of VoIP protocols from private networks with Internet connections using NAT.

Additionally, some SBCs can also allow VoIP calls to be set up between two phones using different VoIP signalling protocols (SIP, H.323, Megaco/MGCP, etc...) as well as performing transcoding of the media stream when different codecs are in use (MGCP = Media Gateway Control Protocol). Many SBCs also provide firewall features for VoIP traffic (denial of service protection, call filtering, bandwidth management, etc...).

Signalling protocols such as H.323, MGCP, and SIP transfer information including media session endpoint IP addresses and UDP (= User Datagram Protocol) port numbers in different layers above OSI (= Open System Interconnection) Layer 4 (IETF TCP/UDP) (IETF = Internet Engineering Task Force; TCP = Transmission Control Protocol). This information cannot be seen by a normal firewall or NAT device, so the subsequent sessions set up are not recognized, do not pass through firewalls, and have incompatible IP addresses across NAT boundaries. SBCs allow NAT and firewall traversal, normally by incorporating those elements with signalling controllers for the required signalling protocols.

The above mentioned specific DNS server may be called a service specific virtual global DNS Server (= SSVGDNSS), as the specific DNS server processes a DNS request associated with a service request dependent on the specific service requested by means of the service request and applies globally to any DNS request. At the same time, the specific DNS server may be considered as a virtual DNS server as the specific DNS server is not a usual DNS server but generally resolves a specific DNS request with an address such that the service request associated with the specific DNS request is forwarded to a SBC. The term "specific DNS request" means a DNS request which is associated with a pre-defined specific service request, e.g., a service request related to a SRV (= Service) lookup, a specific A (= address) request or an MX (= Mail Exchange) lookup. From a general point of view, the concept of the SSVGDNSS can be used for directing certain DNS service requests to particular network elements, e.g., to particular proxies or gateways.

The SSVGDNSS enables operation of SIP entities trying to resolve a SIP URI via a SRV lookup in subnets behind SBCs. The SSVGDNSS is authenticated to resolve any domain for a SIP SRV request with the address of the outgoing SIP proxy routing SIP-related traffic through the SBC. All other DNS requests are forwarded to a regular DNS server.

Regular DNS servers are hierarchically structured and divided into separate zones based on domain names and not services. Therefore, in order to route a service specific request to a specific network element, one would need to change the service specific entry in every zone. However, this is not possible and would not even work since each sub-network can use a different SIP proxy address. Addressing this issue, the present invention allows to use a SIP UA or server which otherwise would not work in a sub-network behind a SBC. By using the SSVGDNSS, service specific requests are easily routed to specific network elements.

Moreover, the configuration related to the present invention can be centrally managed for the sub-network instead of on every SIP entity host.

The concept of the SSVGDNSS is not limited to SIP. The concept of the SSVGDNSS can be used for all services which are required to pass through a particular proxy or gateway. The invention increases the manifoldness of entities/clients that can be operated in sub-networks behind a SBC. The concept of the SSVGDNSS is particularly suitable for network providers wanting to direct certain service requests to specific proxies or gateways.

Also, the SSVGDNSS's address can be automatically distributed via DHCP (= Dynamic Host Configuration Protocol).

Further advantages are achieved by the embodiments of the invention indicated by the dependent claims.

According to a preferred embodiment of the invention, the SBC, when receiving a service request, checks whether the received service request is related to one of a set of pre-defined services. The set of pre-defined services, together with corresponding service specific processing steps, may have been defined by the service provider or the network operator and stored for reference in a memory accessible by the SBC. If the SBC detects that the received service request is related to one of a set of pre-defined services, the SBC retrieves processing instructions from the memory and specifies the steps that have to be taken to process the received service request in an appropriate way.

According to another preferred embodiment of the invention, the specific DNS server of the sub-network, when receiving a DNS request, checks whether the received DNS request is related to one of a set of pre-defined services. Preferably, this examination may be possible through the fact that the DNS request comprises - apart from the domain name to be resolved by the DNS server - a request type field, or query type field, filled with an indicator indicating the type of the service request triggering the DNS request. This query type is passed to the resolver with the domain name in order to enable a user/client to request a particular type of information. The set of pre-defined services or service types, together with corresponding information for resolving a service specific DNS request, may have been defined by the service provider or the network operator and stored for reference in a memory accessible by the specific DNS server. If the specific DNS server detects that the received DNS request is related to one of a set of pre-defined services or service types, the specific DNS server retrieves corresponding resolution instructions from the memory.

The resolution instructions may instruct the specific DNS server how to resolve the domain name received in the DNS request. It is possible that the DNS server is not able to resolve the domain name; in that case the DNS server will relay the resolution task to other appropriate network elements which have the wanted information. In any case, the DNS server will retrieve information associated with the domain name.

If the received DNS request is related to one of a set of pre-defined services or service types, the DNS server is able to generate a reply to the received DNS request. The reply may comprise the domain name/address of a network entity according to the resolution instructions retrieved from the memory, e.g., the address of a specific network element handling the service or the address of an SBC of the sub-network. The specific DNS server sends the reply to the network entity where the DNS request originated.

Preferably, the specific DNS server resolves the received service-related DNS request with the domain name/address of an entity of the sub-network handling said service. The network entity, where the DNS request originated, routes - upon reception of the resolved domain name from the specific DNS server - said service request to the resolved sub-network entity, and said sub-network entity forwards said service request to the Session Border Controller.

It is possible that the service specific DNS request originated from a SIP UA or SIP server which is utilized to initiate a service request, e.g., a VolP phone terminal. Then said originating SIP UA or SIP server receives the reply from the specific DNS server and is provided with a resolved destination address for the service request. Therefore, the service request can be sent to the indicated network element, e.g., the SBC, where the service request is processed.

According to another preferred embodiment of the invention, a client utilized to initiate a service request and/or a network element handling the service request is configured to send a DNS request related to the service request to the specific DNS server by default. For the client and/or the network element, the specific DNS server is perceived as a regular DNS server, i.e., they areonly aware of the specific DNS server. Therefore, it is possible to use a common DNS lookup process to resolve the DNS request by means of the specific DNS server by default. The term "common DNS lookup process" is meant to describe the usual methods and mechanisms used in relation to domain name resolution processes of a state-of-the-art DNS server. The specific DNS server provides a filtering of DNS requests: those DNS requests related to a specific service are resolved in a way that the corresponding service request is routed to the SBC; those DNS requests not related to a specific service are forwarded to a regular DNS server.

In a preferred embodiment, the address of the specific DNS server is automatically distributed via the Dynamic Host Configuration Protocol (= DHCP). The address of the specific DNS server may be automatically distributed to all network elements involved in the processing of a service request and the retrieval of a destination address associated with said service request, e.g., a DNS request associated with said service request. Preferably, the network elements where the address of the specific DNS server has automatically been distributed to consider the received address of the specific DNS server as the default DNS server address.Thus, the specific DNS server is addressed for domain name resolution purpose in any case a destination network element for a service request has to be resolved.

According to another preferred embodiment of the invention, the SBC determines the further processing of the service request dependent on the identity of a client sending the service request. For example, the SBC may determine that a service request is forwarded to a first service provisioning network element if the client belongs to a first service group and is forwarded to a second service provisioning network element if the client belongs to a second service group. The service groups may have been defined by an institution controlling a client. The SBC may determine the identity of a sending client by means of the IP address comprised within the service request as source address. Likewise, the SBC determines the services available in response to a service request dependent on the identity of a client sending the service request.

Preferably, the analysis of a service request or a DNS request associated with the service request may result in the detection that the service request must be processed by a specific network element, e.g., by a specific proxy or gateway. This detection may be made by the specific DNS server when analysing a received DNS request associated with the service request. It is possible that a service provider or another operator may be informed about a newly detected service whose appropriate processing is unclear. Then, the operator may indicate an appropriate processing, in particular an appropriate network element. If the detected service request is not yet part of the set of pre-defined services, the service associated with the service request may be added to the corresponding list stored in the specific DNS server and/or the SBC. Thus, the set of pre-defined services may be up-dated and adapted to current changes and new services.

Preferably, the specific DNS server comprises a set of instructions regarding the processing of DNS requests. The set of instructions may be stored as a rule base in a memory of the specific DNS server or may be centrally managed in a central data base accessible by several specific DNS servers. The set of instructions comprise rules used to decide on an appropriate service for a DNS request. The specific DNS server analyses a received DNS request, extracts characteristic parameters of the DNS request, e.g., a request type of the associated service request indicated in a request type field of the DNS request and a domain name to be resolved given in a domain name field of the DNS request, determines the appropriate service for the DNS request, based on the extracted characteristic parameters and the rule base, and resolves the domain name in accordance with the retrieved appropriate service.

These as well as further features and advantages of the invention will be better appreciated by reading the following detailed description of presently preferred exemplary embodiments taken in conjunction with accompanying drawings of which:
- Fig. 1: is a diagram of an IP network according to an embodiment of the invention.
- Fig. 2: is a diagram detailling the elements of a specific DNS server according to an embodiment of the invention.
- Fig. 3: is a message flow diagram showing processing steps of a service request according to an embodiment of the invention.
- Fig. 4: is a message flow diagram showing processing steps of a service request according to another embodiment of the invention.

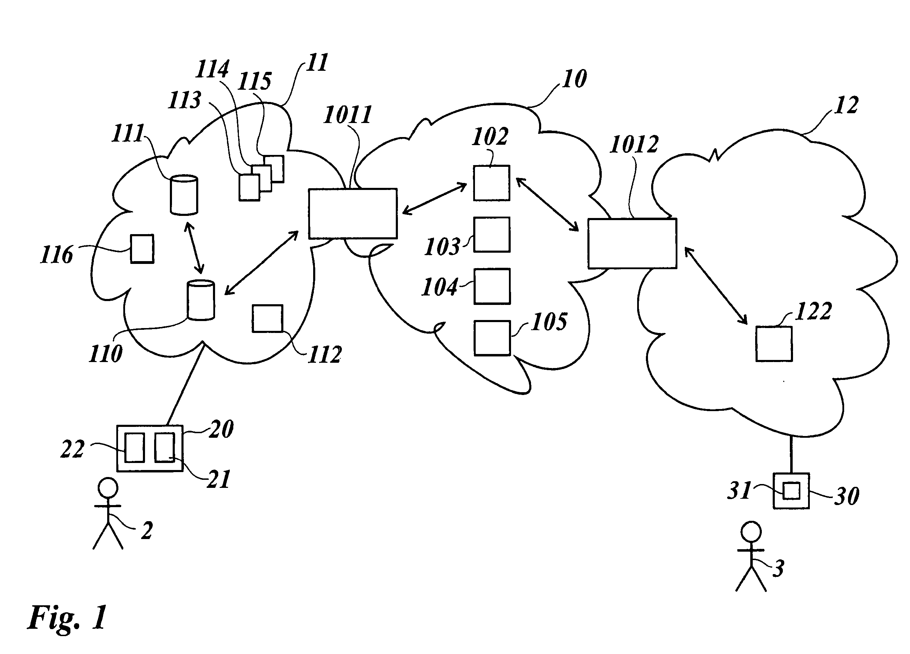

Fig. 1 shows a sub-network 11 which is connected via a SBC 1011 to a core network 10, and a sub-network 12 which is connected via a SBC 1012 to the core network 10. The networks 10, 11, 12 may be IP networks, adapted for the transmission of SIP related messages, VoIP telecommunication messages and providing a web browser with access to the Internet. The SBC entities 1011 and 1012 are network intermediaries located at the administrative boundary of the networks 10 to 12 for policy enforcement on multimedia sessions. The SBCs 1011 and 1012 are visible to peer servers or hosts and terminate as well as originate session legs for an end to end session very much like a SIP proxy.

The sub-network 11 comprises a specific DNS server 110, a regular DNS server 111, a proxy server 112, network entities 113 to 115, and a DHCP server 116. Within the network of the IP networks 10 to 12, the sub-network 11 constitutes a domain with the name "provider11.net". Likewise, within the network of the IP networks 10 to 12, the sub-network 12 constitutes a domain with the name "provider12.net". The core network 10 comprises a SIP server 102 and network elements 103 to 105, and the sub-network 12 comprises a SIP server 122. A SIP UA 21 is used by a first user 2 to establish a telecommunication connection via the sub-network 11, and a SIP UA 31 is used by a second user 3 to establish a telecommunications connection via the sub-network 12. The SIP UA 21, together with a web browser 22 to access Internet based resources, may be comprised within an end device 20 of the user 2. The SIP UA 31 may be comprised within an end device 30 of the user 3.

The first user 2 wishes to establish a VolP telephone call to the second user 3. The first user 2 uses the SIP application 21 on his end device 20 to call the second user 3 on his SIP enabled end device 30 over the IP networks 10 to 12. The first user 2 inputs at his SIP UA 21 a VoIP address, e.g., a SIP URI like "sip:user3@provider12.net", associated with the SIP UA 31 of the user 3 and presses a start button on the end device 20.

Since the SIP UA 21 does not know the location/IP-address of the second user 3 or the location/IP-address of the SIP server 122 in the "provider12.net"-domain of the second user 3, the SIP UA 21 sends an INVITE message to the proxy server 112 that serves the domain of the first user 2. The address of the "provider11.net"-proxy server 112 could have been configured in the SIP UA 21 of the first user 2, or it could have been discovered by DHCP, provided by the DHCP server 116. The proxy server 112 is a server receiving SIP service requests and forwarding them on behalf of the requestor. The proxy server 112 initiates a DNS lookup to find the SIP server that serves the domain provider 12.net. Alternatively, it is also possible that the SIP UA 21 directly performs a DNS lookup without relaying to the proxy server 112.

To perform a DNS lookup, the proxy server 112 or the SIP UA 21 have been provided with the address of the specific DNS server 110. Preferably, the network elements of the sub-network 11 which are adapted to perform DNS lookups have been provided with the address of the specific DNS server 110 by means of the DHCP server 116.

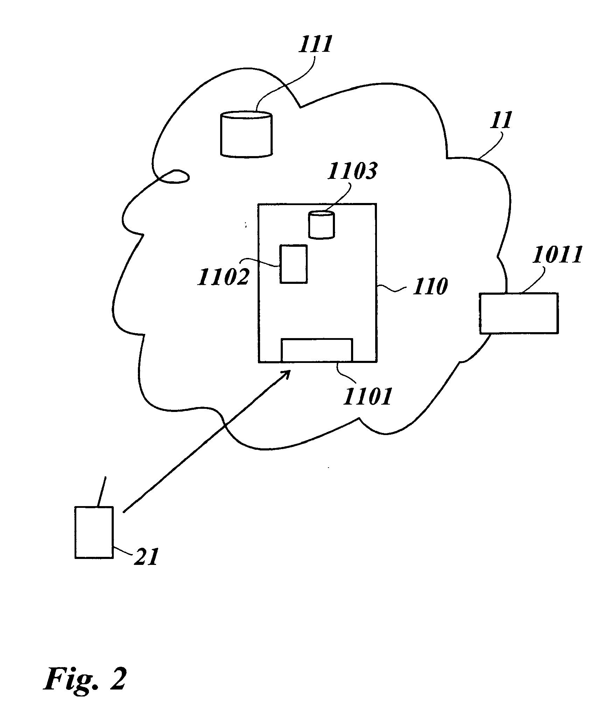

Fig. 2 shows a detailed view of the specific DNS server 110 of the sub-network 11, the SIP UA 21, the regular DNS server 111 and the SBC 1011. The specific DNS server 110 comprises an interface 1101 for receiving and sending messages, e.g., for communicating with other elements of the sub-network 11, a control unit 1102 for processing received messages and performing the procedures according to the invention, and a memory 1103 for storing software products and information required for the processing of the messages.

The specific DNS server 110 is composed of one or several interlinked computers, i.e., a hardware platform, a software platform basing on the hardware platform and several application programs executed by the system platform formed by the software and hardware platform. The functionalities of the server 110 are provided by the execution of these application programs. The application programs or a selected part of these application programs constitute a computer software product providing a service request processing service as described in the following, when executed on the system platform. Further, such computer software product is constituted by a storage medium storing these application programs or said selected part of application programs.

The SIP UA 21 sends a DNS request to the specific DNS server 110, either directly or indirectly via a SIP server of the sub-network 11. The specific DNS server 110 receives the DNS request at the interface 1101 and leads the DNS request to the control unit 1102. The control unit 1102 initiates the analysis of the received DNS request. For example, the analysis comprises the extraction of a request type indicator specifying the type of the service request related to the DNS request from a request type field of the DNS request and a domain name of the targeted entity, i.e., the SIP UA 31, from a domain name field of the DNS request. It is also possible that the DNS request comprises an address of the originating entity sending the DNS request, i.e., the SIP UA 21.

Based on the extracted request type indicator or the address of the originating entity, the control unit 1102 may decide on a requested service associated with the current DNS request. For example, from a request type indicator associated with an SRV request, the control unit 1102 recognizes that the requested service is a SRV service, e.g., a SIP service.

It is also possible that the user 2 uses an email application running on his end device 20, or the web browser 22. Then, the corresponding DNS request will also be handled by the specific DNS server 110. A request type indicator associated with an MX service indicates to the control unit 1102 that the requested service is an email communication. Then, the DNS server 110 will resolve the received domain name with the address of a network element responsible for email services. Likewise, from a request type indicator associated with an A request, the control unit 1102 decides that the requested service is an address service and resolves the received domain name with a network element adapted to handle address services, e.g., an Internet address service.

For the analysis of the DNS request, the control unit 1102 refers to the memory 1103 where a decision rule base is stored. Preferably, the decision rule base has been established by the service provider of the sub-network 11. The decision rule base is used to provide the control unit 1102 with instructions how to handle a specific DNS request. For example, if the control unit 1102 classifies a received DNS request as an MX-related request associated with an email service, the rule base indicates that the SIP service request is to be routed to the SBC 1011. On the other hand, if the control unit 1102 classifies a received DNS request as associated with a web service request that has not been preset, the rule base indicates that the web service request is to be forwarded to the regular DNS server 111.

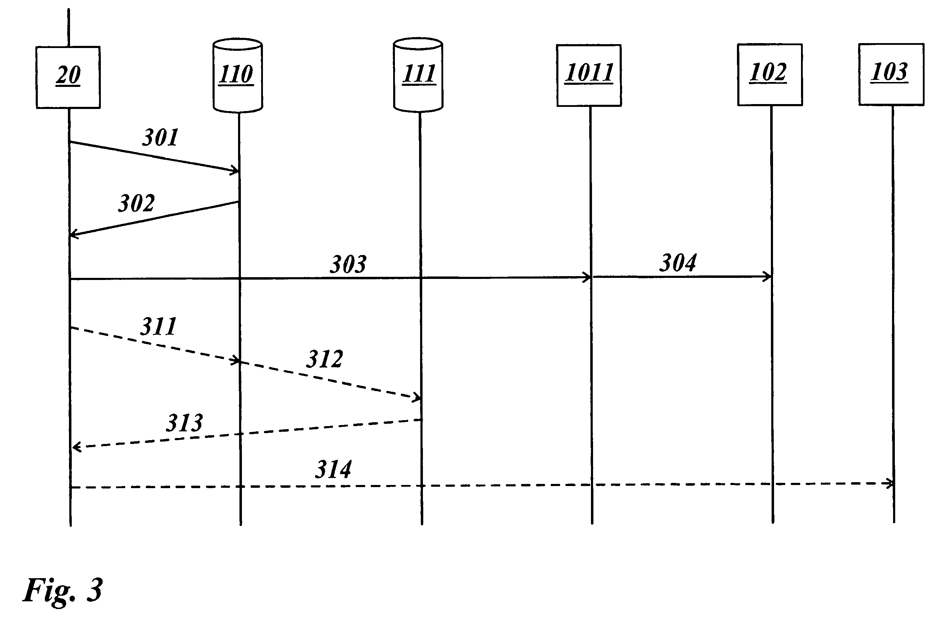

Fig. 3 gives the message flows for two different service requests originating from the end device 20 of a user. Fig. 3 shows, according to the diagram of Fig. 1, the end device 20 associated to the user 2, the specific DNS server 110 and the regular DNS server 111 of a sub-network 11, the SBC 1011 connecting the sub-network 11 with the core network 10, and the SIP server 102 and the network element 103, preferably a web server, of the core network 10. The end device 20 comprises a SIP UA and a web browser operated by the user 2.

In the first case, a DNS request 301 related to a SIP service request 303 is sent from the SIP UA running on the end device 20 of the user 2 to the specific DNS server 110. The SIP UA may have been provided with the address of the specific DNS server 110 by a service provider or automatically via a DHCP server. For the SIP UA and generally for the network elements of the sub-network, the specific DNS server 110 has the status of a regular DNS server which has to be contacted first in case of a DNS request. The specific DNS server 110 analyses the received DNS request 301 and recognizes - preferably from a request type indicator comprised within the DNS request 301 - that the received DNS request 301 is related to a specific service request.

The specific DNS server 110 refers to its rule data base and determines that any DNS request associated with a specific service request should be resolved with the address of the SBC 1011. Consequently, the specific DNS server 110 replies to the received DNS request 301 with a resolution message 302 comprising the address of the SBC 1011. The SIP UA of the end device 20 receives the resolution message 302 and addresses the service request 303 to the address of the SBC 1011. Thus, the service request 303 is routed, by means of the indicated address, from the SIP UA of the end device 20 to the SBC 1011.

On reception of the service request 303, the SBC 1011 determines the type and the destination of the service request 303 and decides where to route the service request 202. The SBC 1011 terminates the received service request 303 and sets up a "new" service request 304, corresponding to the "old" SIP service request 303, to the SIP server 102 of the core network 10.

In another case, a DNS request 311 related to an address service request is sent from a web browser running on the end device 20 of the user 2 to the specific DNS server 110. The web browser may have been provided with the address of the specific DNS server 110 by a service provider or automatically via a DHCP server. For the web browser and generally for the network elements of the sub-network, the specific DNS server 110 has the status of a regular DNS server which has to be contacted first in case of a DNS request. The specific DNS server 110 analyses the received DNS request 311 and recognizes - preferably from a request type indicator comprised within the DNS request 311 - that the received DNS request 311 is related to an address service request.

The specific DNS server 110 refers to its rule data base and determines that any DNS request associated with an address service request should be forwarded to the regular DNS server 111. Consequently, the specific DNS server 110 forwards the DNS request 312 to the regular DNS server 111. The regular DNS server 111 resolves the DNS request 312 with the appropriate address of the requested web service and replies the information as a message 313 back to the web browser of the end device 20. The web browser receives the message 313 comprising the resolved destination address and routes the service request 314 to a resolved network element 103 of the core network 10.

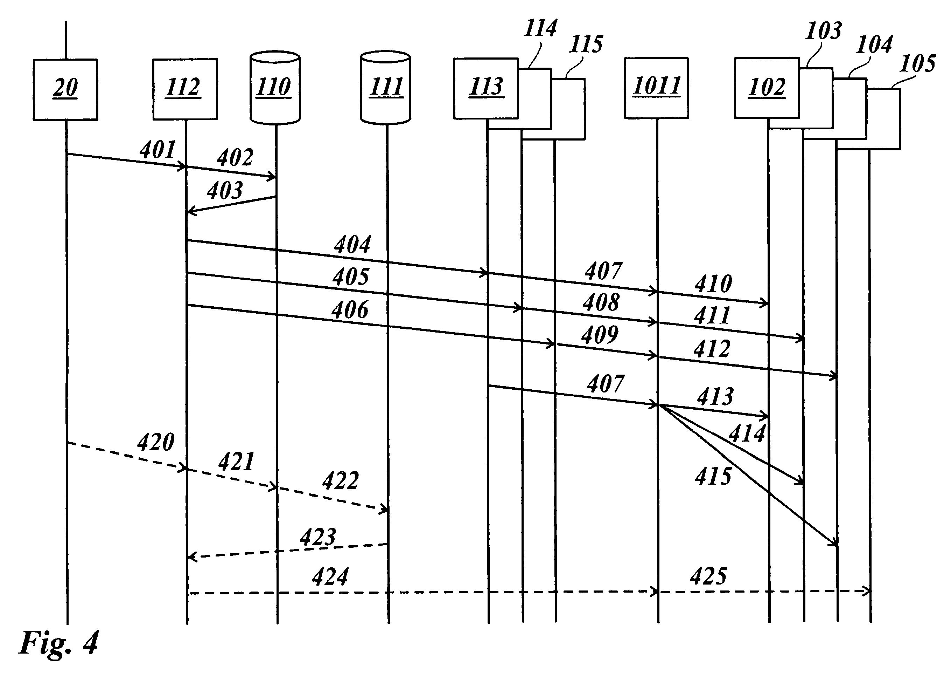

Fig. 4 gives another embodiment of the present invention. Fig. 4 shows, as in Figs. 1 and 3, the end device 20 associated to the user 2, the proxy server 112, the network entities 113 to 115, the specific DNS server 110 and the regular DNS server 111 of the sub-network 11, the SBC 1011 connecting the sub-network 11 with the core network 10, and the SIP server 102 and the network elements 103 to 105 of the core network 10. The end device 20 comprises an application requiring a network service operated by the user 2.

In a first example, the application of the end device 20 sends a service request 401 to the proxy server 112 of the sub-network 11. The proxy server 112 is the first contact element of the application, and generally any service request is routed to the proxy server 112 by default. The proxy server 112 does not know where the destination address indicated in the service request 401 is located, so the proxy server 112 sends a DNS request 402 with regard to the received service request 401 to the specific DNS server 110.

The proxy server 112 may have been provided with the address of the specific DNS server 110 by a service provider or automatically via a DHCP server. For the proxy server 112, and generally for the network elements of the sub-network, the specific DNS server 110 has the status of a regular DNS server which has to be contacted first in case of a DNS request. That means that the specific DNS server 110 is the default resolver. The specific DNS server 110 analyses the received DNS request 402 and recognizes - preferably from a request type indicator indicating the type of the service request 401 comprised within the DNS request 402 - the specific type of the service request 401 which the received DNS request 402 is related to.

This recognition step may be performed by means of a decision rule base stored in a memory of the specific DNS server 110. Said decision rule base may contain a list of specific services and associated network elements 113 to 115 handling the specific services. For example, it is possible that the service request is related to a SIP service. Then the decision rule base may indicate that the appropriate network element handling SIP service requests is the network element 113. In another example, it is possible that the service request is related to a FTP service (FTP = File Transfer Protocol). Then the decision rule base may indicate that the appropriate network element handling FTP service requests is the network element 114. In still another example, it is possible that the service request is related to an MX-service of an email application. Then the decision rule base may indicate that the appropriate network element handling MX service requests is the network element 115.

After the recognition step and the resolution step, i.e., the lookup in the decision rule base, the specific DNS server 110 replies to the proxy server 112 with a resolution message 403. The resolution message 403 provides the proxy server 112 with the resolved address of the respective network element 113 to 115 handling the recognized network service in the resolved domain. The proxy server 112 receives the resolution message 403 and sets up a service request 404 to 406 to the respective network element 113 to 115. Fig. 4 gives three different messages 404 to 406 to show the possible alternatives. In reality, however, only one message 404 to 406 will be sent to one of the corresponding network elements 113 to 115, according to the type of the specific network service requested by the application of the end device 20.

The network elements 113 to 115 may be servers, gateways or proxies handling specific services, preferably outgoing proxies routing traffic through the SBC 1011. Once the network elements 113 to 115 have received the service requests 404 to 406, the service requests 407 to 409 are forwarded by the network elements 113 to 115 to the SBC 1011. The SBC determines, dependent on the type of the service request and the addresses of the origin and target elements of the service request, the appropriate network element 102 to 104 for processing the service request. For example, in case of the SIP service request 407, the SBC will choose the network element 102, in case of the FTP service request 408, the SBC will choose the network element 103, and in case of the POP service request 409, the SBC will choose the network element 104 for further processing of the service requests. Accordingly, the SBC 1011 will set up a corresponding service request 410 to 412 and send it to the chosen network element 102 to 104.

It is also possible that the next processing network element is chosen by the SBC 1011 as a function of the identity/address of the application where the service request originated. For example, having received a service request 407 at the SBC 1011, the SBC 1011 may choose one of the network elements 413 to 415 as a function of the IP address of the end device 20. Accordingly, the service request 407 is terminated and set up as a new request to one of the network elements 413 to 415, or the service request 407 is even finished finally at the SBC 1011 without further action. The latter option may be chosen, e.g., when a user triggering a service request is not authorized to trigger such service request. This way it may be possible to control the actions of a user with regard to network-based services.

In a preferred embodiment, the SBC 1011 may comprise several stand-alone SBC modules or consist of a plurality of SBC elements, e.g., different packet-to-packet gateways, connecting the sub-network 11 to different types and/or levels of the core network 10. Then, the decision rule base and/or the network elements 113 to 115 may contain indications about the appropriate SBC elements which should be chosen for a specific service request.

In another example, the application of the end device 20 sends a service request 420 to the proxy server 112 of the sub-network 11. The proxy server 112 is the first contact element of the application, and generally any service request is routed to the proxy server 112. The proxy server 112 does not know where the destination address indicated in the service request 401 is located, so the proxy server 112 sends a DNS request 421 with regard to the received service request 420 to the specific DNS server 110.

The proxy server 112 may have been provided with the address of the specific DNS server 110 by a service provider or automatically via a DHCP server. For the proxy server 112 and generally for the network elements of the sub-network, the specific DNS server 110 has the status of a regular DNS server which has to be contacted first in case of a DNS request. The specific DNS server 110 analyses the received DNS request 421 and recognizes - preferably from a request type indicator indicating the type of the service request 420, said indicator being comprised within the DNS request 421 - the specific type of the service request 420 which the received DNS request 421 is related to.

This recognition step may be performed by means of a decision rule base stored in a memory of the specific DNS server 110. Said decision rule base may contain a list of specific services and associated network elements 113 to 115 handling the specific services. In the present example, it is possible that the service request is not listed in the decision rule base. Thus, the specific DNS server 110 forwards the DNS request 422 to the regular DNS server 111. The regular DNS server 111 may resolve the received DNS request 422 in the usual manner and reply the resolved destination address to the proxy server 112 where the DNS request originated.

Provided with the resolved destination address of the requested service, the proxy server 112 can route the service request 424, 425 to the destination network element 105. It is possible that the routing is not directly from the proxy server 112 to the destination network element 105 but that an intermediate step is taken at the SBC 1011, which controls all traffic from and to the sub-network 11.

## Claims

1. A method of processing a service request (401) originating in a sub-network (11) of an IP network (10, 11, 12) and targeted outside of the sub-network (11), whereby the sub-network (11) is connected to an adjacent sub-network (10) of the IP network (10, 11, 12) by means of a Session Border Controller (1011),
the method comprising the steps of:
receiving a DNS request (301, 402, 311, 421) associated with the service request (401) at a specific DNS server (110) receiving DNS requests in place of a regular DNS server (111) whereby the specific DNS server (110) has the status of a regular DNS server which has to be contacted first in case of a DNS request and the specific DNS server (110) processes a DNS request associated with a service request dependent on the specific service requested by means of the service request;
analysing the received DNS request (301, 402, 311, 421); the method being **characterized in that** the method comprises the steps of: if the received DNS request (301, 402) is related to one of a set of pre-defined services, resolving the received service-related DNS request (301, 402) with an address involving the routing of said service request (401) to the Session Border Controller (1011);
otherwise, if the received DNS request (311, 421) is not related to one of the set of pre-defined services, forwarding the DNS request (311, 421) to the regular DNS server (111).

2. The method of claim 1,
**characterised in**
**that** the method comprises the further steps of:
determining the further processing of the service request (401) by the Session Border Controller (110) if the received DNS request (301, 402) is related to one of a set of pre-defined services.

3. The method of claim 1,
**characterised in**
**that** the method comprises the further steps of:
if the received DNS request (301, 402) is related to one of a set of pre-defined services, resolving the received service-related DNS request (301, 402) with the name of an entity (113, 114, 115) of the sub-network (11) handling said service, routing said service request (404, 405, 406) to the sub-network entity (113, 114, 115), and forwarding said service request (407, 408, 409) from the sub-network entity (113, 114, 115) to the Session Border Controller (1011).

4. The method of claim 1,
**characterised in**
**that** the method comprises the further steps of:
configuring a client (20) or a server (112) processing the service request (401) to address the specific DNS server (110) as default resolver;
using a common DNS lookup process to resolve the DNS request (301, 402).

5. The method of claim 1,
**characterised in**
**that** the method comprises the further step of:
automatically distributing the address of the specific DNS server (110) via the Dynamic Host Configuration Protocol, DHCP.

6. The method of claim 1,
**characterised in**
**that** the method comprises the further step of:
determining the further processing of the service request (401) and/or services available in response to the service request (401) dependent on the identity of a client (20) sending the service request (401).

7. The method of claim 1,
**characterised in**
**that** the method comprises the further step of:
recognizing a service request (401) which is required to pass through a specific network element (113 to 115, 1011), in particular a specific proxy or gateway;
adding the service associated with the service request (401) to the set of pre-defined services.

8. A specific DNS server (110) for processing a DNS request associated with a service request (401),
the specific DNS server (110) comprising an interface (1101) for receiving the DNS request (301, 402, 311, 421) associated with the service request (401), and a control unit (1102) adapted to analyse the received DNS request (301, 402), the specific DNS server being **characterised in that** the control unit is adapted to resolve, if the received DNS request (301, 402) is related to one of a set of pre-defined services, the received service-related DNS request (301, 402) with an address involving the routing of said service request (401) to a Session Border Controller (1011), and otherwise, if the received DNS request (311, 421) is not related to one of the set of pre-defined services, forward the DNS request (311, 421) to a regular DNS server (111), whereby the specific DNS server (110) has the status of a regular DNS server which has to be contacted first in case of a DNS request and the specific DNS server (110) is adapted to process a DNS request associated with a service request dependent on the specific service requested by means of the service request.

9. The specific DNS server (110) of claim 8,
**characterised in**
**that** the specific DNS server (110) further comprises a memory (1103) adapted to store a decision rule base which may be used to decide on the appropriate service for the DNS request (301, 402, 311, 421) on the basis of parameters of the DNS request (301, 402, 311, 421).

10. A computer program product for processing a service request (401),
the computer program product, when executed by a specific DNS server (110) performing the steps of:
receiving a DNS request (301, 402, 311, 421) associated with the service request (401) at the specific DNS server (110) whereby the specific DNS server (110) has the status of a regular DNS server which has to be contacted first in case of a DNS request and the specific DNS server (110) processes a DNS request associated with a service request dependent on the specific service requested by means of the service request;
analysing the received DNS request (301, 402, 311, 421); the computer program product being **characterized in that** it performs the steps of:
if the received DNS request (301, 402) is related to one of a set of pre-defined services, resolving the received service-related DNS request (301, 402) with an address involving the routing of said service request (401) to a Session Border Controller (1011);
otherwise, if the received DNS request (311, 421) is not related to one of the set of pre-defined services, forwarding the DNS request (311, 421) to the regular DNS server (111).

## Patentansprüche

1. Ein Verfahren zur Bearbeitung einer Dienstanfrage (401), welche von einem Subnetzwerk (11) eines IP-Netzwerks (10, 11, 12) stammt und an eine Instanz außerhalb des Subnetzwerks (11) gerichtet ist, wobei das Subnetzwerk (11) über einen Session Border Controller (1011) an ein benachbartes Subnetzwerk (10) des IP-Netzwerks (10, 11, 12) angeschlossen ist,
wobei das Verfahren die folgenden Schritte umfasst:
Empfangen einer der Dienstanfrage (401) zugeordneten DNS-Anfrage (301, 402, 311, 421) an einem spezifischen DNS-Server (110), welcher an Stelle eines herkömmlichen DNS-Servers (111) DNS-Anfragen empfängt, wobei der spezifische DNS-Server (110) den Status eines herkömmlichen DNS-Servers, welcher im Fall einer DNS-Anfrage zuerst zu kontaktieren ist, aufweist, und wobei der spezifische DNS-Server (110) eine einer Dienstanfrage zugeordnete DNS-Anfrage entsprechend dem mittels der Dienstanfrage angeforderten spezifischen Dienst bearbeitet.
Analysieren der empfangenen DNS-Anfrage (301, 402, 311, 421); wobei das Verfahren **dadurch gekennzeichnet ist, dass** es die folgenden Schritte umfasst:
Wenn die empfangene DNS-Anfrage (301, 402) einen aus einem Satz von vordefinierten Diensten gewählten Dienst betrifft, Auflösen der empfangenen dienstbezogenen DNS-Anfrage (301, 402) in eine Adresse für die Weiterleitung der besagten Dienstanfrage (401) an den Session Border Controller (1011);
anderenfalls, wenn die empfangene DNS-Anfrage (311, 421) nicht einen aus einem Satz von vordefinierten Diensten gewählten Dienst betrifft, Senden der DNS-Anfrage (311, 421) an den herkömmlichen DNS-Server (111).

2. Das Verfahren nach Anspruch 1,
**dadurch gekennzeichnet,**
**dass** das Verfahren die folgenden weiteren Schritte umfasst:
Bestimmen der weiteren Bearbeitung der Dienstanfrage (401) durch den Session Border Controller (110), wenn die empfangene DNS-Anfrage (301, 402) einen aus einem Satz von vordefinierten Diensten gewählten Dienst betrifft.

3. Das Verfahren nach Anspruch 1,
**dadurch gekennzeichnet,**
**dass** das Verfahren die folgenden weiteren Schritte umfasst:
Wenn die empfangene DNS-Anfrage (301. 402) einen aus einem Satz von vordefinierten Diensten gewählten Dienst betrifft, Auflösen der empfangenen dienstbezogenen DNS-Anfrage (301, 402) in den Namen einer Instanz (113, 114, 115) des Subnetzwerks (11), welches den besagten Dienst bearbeitet, Weiterleiten der besagten Dienstanfrage (404, 405, 406) an die Subnetzwerk-Instanz (113, 114, 115), und Senden der besagten Dienstanfrage (407, 408, 409) von der Subnetzwerk-Instanz (113, 114, 115) an den Session Border Controller (1011).

4. Das Verfahren nach Anspruch 1,
**dadurch gekennzeichnet,**
**dass** das Verfahren die folgenden weiteren Schritte umfasst:
Konfigurieren eines Clients (20) oder eines Servers (112), welcher die Dienstanfrage (401) bearbeitet, für das Adressieren des spezifischen DNS-Servers (110) als Standardauflöser;
Benutzen eines gemeinsamen DNS-Lookup-Prozesses für das Auflösen der DNS-Anfrage (301, 402).

5. Das Verfahren nach Anspruch 1.
**dadurch gekennzeichnet,**
**dass** das Verfahren die folgenden weiteren Schritte umfasst:
Automatisches Verteilen der Adresse des spezifischen DNS-Servers (110) über das Dynamic Host Configuration Protocol, DHCP.

6. Das Verfahren nach Anspruch 1,
**dadurch gekennzeichnet,**
**dass** das Verfahren die folgenden weiteren Schritte umfasst:
Bestimmen der weiteren Bearbeitung der Dienstanfrage (401) und/oder verfügbaren Dienste in Antwort auf die Dienstanfrage (401) entsprechend der Identität eines Clients (20), welcher die Dienstanfrage (401) sendet.

7. Das Verfahren nach Anspruch 1,
**dadurch gekennzeichnet,**
**dass** das Verfahren die folgenden weiteren Schritte umfasst:
Erkennen einer Dienstanfrage (401), welche ein spezifisches Netzwerkelement (113 bis 115, 1011), insbesondere einen spezifischen Proxy oder ein spezifisches Gateway, durchlaufen soll;
Hinzufügen des der Dienstanfrage (401) zugeordneten Dienstes zum Satz von vordefinierten Diensten.

8. Ein spezifischer DNS-Server (110) zur Bearbeitung einer Dienstanfrage (401) zugeordneten DNS-Anfrage,
wobei der spezifische DNS-Server (110) eine Schnittstelle (1101) für den Empfang der der Dienstanfrage (401) zugeordneten DNS-Anfrage (301, 402, 311, 421) sowie eine Kontrolleinheit (1102), welche fähig ist, die empfangene DNS-Anfrage (301, 402) zu analysieren, umfasst, wobei der spezifische DNS-Server **dadurch gekennzeichnet ist, dass** die Kontrolleinheit fähig ist, die empfangene dienstbezogene DNS-Anfrage (301, 402) in eine Adresse für die Weiterleitung der besagten Dienstanfrage (401) an einen Session Border Controller (1011) aufzulösen, wenn die empfangene DNS-Anfrage (301, 402) einen der in einem Satz von vordefinierten Diensten enthaltenen Dienst betrifft, und anderenfalls, wenn die empfangene DNS-Anfrage (311, 421) nicht einen der im Satz von vordefinierten Diensten enthaltenen Dienst betrifft, die DNS-Anfrage (311, 421) an einen herkömmlichen DNS-Server (111) zu senden, wobei der spezifische DNS-Server (110) den Status eines herkömmlichen DNS-Server, welcher im Fall einer DNS-Anfrage zuerst zu kontaktieren ist, aufweist, und der spezifische DNS-Server (110) fähig ist, einer Dienstanfrage zugeordnete DNS-Anfrage entsprechend dem mittels der Dienstanfrage angeforderten spezifischen Dienst zu bearbeiten

9. Der spezifische DNS-Server (110) nach Anspruch 8,
**dadurch gekennzeichnet,**
**dass** der spezifische DNS-Server (110) weiterhin einen Speicher (1103) umfasst, welcher fähig ist, eine Entscheldungsregelbasis zu speichern, welche angewendet werden kann, um über den geeigneten Dienst für die DNS-Anfrage (301, 402, 311, 421) auf der Basis der Parameter der DNS-Anfrage (301, 402, 311, 421) zu entscheiden.

10. Ein Computerprogramm-Produkt für die Bearbeitung einer Dienstanfrage (401),
wobei das Computerprogramm-Produkt, wenn es von einem spezifischen DNS-Server (110) ausgeführt wird, die folgenden Schritte durchführt:
Empfangen einer der Dienstanfrage (401) zugeordneten DNS-Anfrage (301, 402, 311, 421) an dem spezifischen DNS-Server (110), wobei der spezifische DNS-Server (110) den Status eines herkömmlichen DNS-Servers, welcher im Fall einer DNS-Anfrage zuerst zu kontaktieren ist, aufweist und der spezifische DNS-Server (110) eine einer Dienstanfrage zugeordnete DNS-Anfrage entsprechend dem mittels der Dienstanfrage angeforderten spezifischen Dienst bearbeitet;
Analysieren der empfangenen DNS-Anfrage (301, 402, 311, 421); wobei das Computerprogramm-Produkt **dadurch gekennzeichnet ist, dass** es die folgenden Schritte ausführt:
Wenn die empfangene DNS-Anfrage (301, 402) einen aus einem Satz von vordefinierten Diensten gewählten Dienst betrifft, Auflösen der empfangenen dienstbezogenen DNS-Anfrage (301, 402) in eine Adresse für die Weiterleitung der besagten Dienstanfrage (401) an einen Session Border Controller (1011);
anderenfalls, wenn die empfangene DNS-Anfrage (311. 421) nicht einen aus einem Satz von vordefinierten Diensten gewählten Dienst betrifft, Senden der DNS-Anfrage (311, 421) an den herkömmlichen DNS-Server (111).

## Revendications

1. Procédé de traitement d'une requête de service (401) provenant d'un sous-réseau (11) d'un réseau IP (10, 11, 12) et dirigée vers l'extérieur du sous-réseau (11), selon lequel le sous-réseau (11) est relié à un sous-réseau adjacent (10) du réseau IP (10, 11, 12) au moyen d'un contrôleur de session en périphérie (1011),
le procédé comprenant les étapes suivantes :
recevoir une requête DNS (301, 402, 311, 421) associée à la requête de service (401) au niveau d'un serveur DNS spécifique (110) recevant les requêtes DNS à la place d'un serveur DNS habituel (111) selon lequel le serveur DNS spécifique (110) a le statut d'un serveur DNS habituel qui doit être contacté en premier lieu en cas de requête DNS et le serveur DNS spécifique (110) traite une requête DNS associée à une requête de service en fonction du service spécifique demandé au moyen de la requête de service ;
analyser la requête DNS reçue (301, 402, 311, 421) ; le procédé étant **caractérisé en ce qu'**il comprend les étapes suivantes ;
si la requête DNS reçue (301, 402) est liée à un service d'un ensemble de services prédéfinis, résoudre la requête DNS reçue liée au service (301, 402) avec une adresse comportant le routage de ladite requête de service (401) vers le contrôleur de session en périphérie (1011) ;
autrement, si la requête DNS reçue (311, 421) n'est pas liée à un service d'un ensemble de services prédéfinis, acheminer la requête DNS (311, 421) vers le serveur DNS habituel (111).

2. Procédé selon la revendication 1,
**caractérisé en ce que**
le procédé comprend les étapes supplémentaires suivantes :
déterminer le traitement supplémentaire de la requête de service (401) par le contrôleur de session en périphérie (110) si la requête DNS reçue (301, 402) est liée à un service d'un ensemble de services prédéfinis.

3. Procédé selon la revendication 1,
**caractérisé en ce que**
le procédé comprend les étapes supplémentaires suivantes :
si la requête DNS reçue (301, 402) est liée à un service d'un ensemble de services prédéfinis, résoudre la requête DNS reçue liée au service (301, 402) avec le nom d'une entité (113, 114, 115) du sous-réseau (11) traitant ledit service, router ladite requête de service (404, 405, 406) vers l'entité de sous-réseau (113, 114, 115), et acheminer ladite requête de service (407, 408, 409) de l'entité de sous-réseau (113, 114. 115) vers le contrôleur de session en périphérie (1011),

4. Procédé selon la revendication 1,
**caractérisé en ce que**
le procédé comprend les étapes supplémentaires suivantes :
configurer un client (20) ou un serveur (112) traitant la requête de service (401) pour adresser le serveur DNS spécifique (110) comme résolveur par défaut ;
utiliser un processus de recherche DNS commun pour résoudre la requête DNS (301, 402).

5. Procédé selon la revendication 1,
**caractérisé en ce que**
le procédé comprend l'étape supplémentaire suivante :
distribuer automatiquement l'adresse du serveur DNS spécifique (110) via le protocole de configuration dynamique des hôtes DHCP.

6. Procédé selon la revendication 1,
**caractérisé en ce que**
le procédé comprend l'étape supplémentaire suivante :
déterminer le traitement supplémentaire de la requête de service (401) et/ou les services disponibles en réponse à la requête de service (401) en fonction de l'identité d'un client (20) qui envoie la requête de service (401).

7. Procédé selon la revendication 1,
**caractérisé en ce que**
le procédé comprend l'étape supplémentaire suivante :
identifier une requête de service (401) qui doit passer à travers un élément de réseau spécifique (113 à 115, 1011), en particulier un serveur mandataire ou une passerelle spécifique ;
ajouter le service associé à la requête de service (401) à l'ensemble de services prédéfinis.

8. Serveur DNS spécifique (110) destiné à traiter une requête DNS associée à une requête de service (401),
le serveur DNS spécifique (110) comprenant une interface (1101) destinée à recevoir la requête DNS (301, 402, 311, 421) associée à la requête de service (401), et une unité de commande (1102) adaptée pour analyser la requête DNS reçue (301, 402) le serveur DNS spécifique étant **caractérisé en ce que** l'unité de commande est adapté pour résoudre, si la requête DNS reçue (301, 402) est liée à un service d'un ensemble de services prédéfinis, la requête DNS reçue liée au service (301, 402) avec une adresse comportant le routage de ladite requête de service (401) vers un contrôleur de session en périphérie (1011), et autrement, si la requête DNS reçue (311, 421) n'est pas liée à un services de l'ensemble de services prédéfinis, acheminer la requête DNS (311, 421) vers un serveur DNS habituel (111), selon lequel le serveur DNS spécifique (110) a le statut d'un serveur DNS habituel qui doit être contacté en premier lieu en cas de requête DNS et le serveur DNS spécifique (110) est adapté pour traiter une requête DNS associée à une requête de service en fonction du service spécifique demandé au moyen de la requête de service.

9. Serveur DNS spécifique (110) selon la revendication 8,
**caractérisé en ce que**
ce serveur DNS spécifique (110) comprend en outre une mémoire (1103) adaptée pour mémoriser une base de règles de décision qui peut être utilisée pour décider du service approprié pour la requête DNS (301, 402, 311, 421) sur la base des paramètres de la requête DNS (301, 402. 311, 421).

10. Produit de programme informatique destiné à traiter une requête de service (401),
le produit de programme informatique, une fois exécuté par un serveur DNS spécifique (110) effectuant les étapes suivantes :
recevoir une requête DNS (301, 402, 311, 421) associée à la requête de service (401) au niveau du serveur DNS spécifique (110) selon lequel le serveur DNS spécifique (110) a le statut d'un serveur DNS habituel qui doit être contacté en premier lieu en cas de requête DNS et le serveur DNS spécifique (110) traite une requête DNS associée à une requête de service en fonction du service spécifique demandé au moyen de la requête de service ;
analyser la requête DNS reçue (301, 402, 311, 421) ;
le produit de programme informatique étant **caractérisé en ce qu'**il effectue les étapes suivantes :
si la requête DNS reçue (301, 402) est liée à un service d'un ensemble de services prédéfinis, résoudre la requête DNS reçue liée au service (301, 402) avec une adresse comportant le routage de ladite requête de service (401) vers un contrôleur de session en périphérie (1011) ;
autrement, si la requête DNS reçue (311, 421) n'est pas liée à un service de l'ensemble de services prédéfinis, acheminer la requête DNS (311, 421) vers le serveur DNS habituel (111).
